# EUROPEAN PATENT APPLICATION

(11) **EP 4 495 742 A1**
(43) Date of publication of application: **22.01.2025**
(21) Application number: 23794662.9
(22) Date of filing: 10.01.2023
(51) Int. Cl.: G06F 3/01, G06F 3/0482

(54) **OPERATION INTERFACE GENERATION METHOD AND DEVICE AND CONTROL METHOD AND DEVICE**

(30) Priority: 24.04.2022 CN 202210450377
(71) Applicant: ZTE Corporation, Shenzhen, Guangdong 518057 (CN)
(72) Inventor: HU, Anni, Shenzhen, Guangdong 518057 (CN)
(74) Representative: Chimini, Francesco
(86) International application number: PCT/CN2023/071748
(87) International publication number: WO 2023/207226

(57) **Abstract**

The present disclosure relates to the field of virtual reality technology. Provided are a method and apparatus for generating an operation interface, and a method and apparatus for controlling an operation interface. The method for generating an operation interface comprises: acquiring movement information of an operation hand of a user; determining a three-dimensional movement path of the operation hand according to the movement information of the operation hand; and mapping the three-dimensional movement path of the operation hand to a preset curved mesh model to generate an operation interface, wherein the preset curved mesh model is a model determined on the basis of a preset wiring method and a preset angle. By means of the generation method, a specific movement path of an operation hand of a user can be accurately acquired, and a personalized operation method can be conveniently constructed for the user, so that the user can accurately control a virtual object by means of a stereoscopic operation interface, thereby improving the operation precision of the user on a distant virtual object, reducing the operation difficulty of the user on the virtual object, and improving the operation efficiency of the user on the virtual object.

## Description

### Cross-Reference to Related Application

The present disclosure is based on Chinese Patent Application No. CN 202210450377.1 filed on April 24, 2002 and entitled "Operation Interface Generation Method and Device and Control Method and Device", and claims priority to this patent application, the disclosure of which is incorporated herein by reference in its entirety.

### Technical Field

The present disclosure relates to the field of virtual reality technology, and in particular, to a method and apparatus for generating an operation interface, and a method and apparatus for controlling an operation interface.

### Background

In the field of human-machine interaction, a user usually uses a screen-based touch interaction method to perform information interaction with a machine device. With the development of mixed reality (MR) technology, a user may also use a gesture-based interaction method to perform information interaction with a machine device. The gesture-based interaction method can enable a user to get rid of the limitation of a screen, and provides a natural and humanized interaction method for the user, so that the user can directly operate and control a virtual object in a virtual world.

At present, common gesture interaction methods comprise: a gesture extension line operation method and a direct gesture interaction method. However, when the gesture extension line operation method is used, if the user increases the operation angle of his/her hand, the selection range of the user for distant objects will be multiplied, thereby reducing the operation precision of the user on the distant objects; and when the direct gesture interaction method is used, as the operation difficulty of the user on virtual objects at different positions in the virtual world is different, the operation efficiency of the user on the virtual objects is reduced.

### Summary

Provided are a method and apparatus for generating an operation interface, and a method and apparatus for controlling an operation interface.

Embodiments of the present disclosure provide a method for generating an operation interface, comprising: acquiring movement information of an operation hand of a user; determining a three-dimensional movement path of the operation hand according to the movement information of the operation hand; and mapping the three-dimensional movement path of the operation hand to a preset curved mesh model to generate an operation interface, wherein the preset curved mesh model is a model determined on the basis of a preset wiring method and a preset angle.

Embodiments of the present disclosure provide a method for controlling an operation interface, the operation interface being generated on the basis of the method for generating an operation interface according to any embodiment of the present disclosure, and the method comprises: acquiring operation information of a user in the operation interface; and determining a control method of the user for a virtual object according to the operation information.

Embodiments of the present disclosure provide an apparatus for generating an operation interface, comprising: a first acquiring module, configured to acquire movement information of an operation hand of a user; a path determination module, configured to determine a three-dimensional movement path of the operation hand according to the movement information of the operation hand; and a generation module, configured to map the three-dimensional movement path of the operation hand to a preset curved mesh model to generate an operation interface, wherein the preset curved mesh model is a model determined on the basis of a preset wiring method and a preset angle.

Embodiments of the present disclosure provide an apparatus for controlling an operation interface, the operation interface being generated on the basis of the method for generating an operation interface according to any embodiment of the present disclosure, and the apparatus comprises: a second acquiring module configured to acquire operation information of a user in the operation interface; and a control module, configured to determine a control method of the user for a virtual object according to the operation information.

Embodiments of the present disclosure provide an electronic device, comprising: one or more processors; and a memory, on which one or more programs are stored, the one or more programs are configured to, when executed by the one or more processors, causing the one or more processors to implement the method for generating an operation interface according to any embodiment of the present disclosure or the method for controlling an operation interface according to any embodiment of the present disclosure.

Embodiments of the present disclosure provide a computer-readable storage medium, the computer-readable storage medium storing a computer program which, when executed by a processor, implements the method for generating an operation interface according to any embodiment of the present disclosure or the method for controlling an operation interface according to any embodiment of the present disclosure.

With respect to the embodiments above and other aspects of the present disclosure and implementations thereof, further description is provided in the brief description of the drawings, the detailed description of the embodiments and the claims.

### Brief Description of the Drawings

Fig. 1 is a schematic flowchart showing a method for generating an operation interface provided according to embodiments of the present disclosure.
Fig. 2 is a schematic diagram showing an operation interface provided according to embodiments of the present disclosure.
Fig. 3 is a schematic diagram showing a preset curved mesh model provided according to embodiments of the present disclosure.
Fig. 4 is a schematic diagram showing a method for constructing a preset curved mesh model provided according to embodiments of the present disclosure.
Fig. 5 is a schematic diagram showing a user operation method in the process of constructing a preset curved mesh model provided according to embodiments of the present disclosure.
Fig. 6 is a schematic diagram showing a user operation method in the process of constructing a preset curved mesh model provided according to some other embodiments of the present disclosure.
Fig. 7 is a schematic diagram showing a three-dimensional operation interface provided according to embodiments of the present disclosure.
Fig. 8 is a schematic flowchart showing a method for controlling an operation interface provided according to embodiments of the present disclosure.
Fig. 9 is a composition block diagram showing an apparatus for generating an operation interface provided according to embodiments of the present disclosure.
Fig. 10 is a composition block diagram showing an apparatus for controlling an operation interface provided according to embodiments of the present disclosure.
Fig. 11 is a schematic structural diagram showing an electronic device provided according to embodiments of the present disclosure.
Fig. 12 is a schematic flowchart showing a working method of an electronic device provided according to embodiments of the present disclosure.
Fig. 13 is a schematic diagram showing a three-dimensional operation interface provided according to some other embodiments of the present disclosure.
Fig. 14 is a schematic diagram showing a three-dimensional operation interface provided according to still some other embodiments of the present disclosure.
Fig. 15 is a structural diagram showing an exemplary hardware architecture of a computing device capable of implementing a method for generating an operation interface or a method for controlling an operation interface according to embodiments of the present disclosure.

### Detailed Description of the Embodiments

To make the objects, technical solutions and advantages of the embodiments of the present disclosure clearer, hereinafter, the embodiments of the present disclosure will be described in detail with reference to the accompanying drawings. It should be noted that, embodiments in the present disclosure and features in the embodiments may be combined with one another without conflicts.

Mixed Reality (MR) technology is a technology for presenting virtual scene information in a real scene. MR technology can build an information loop for interaction feedback between the real world, a virtual world and a user, so as to enhance the real feeling of user experience. MR technology may comprise Augmented Reality (AR) technology and Virtual Reality (VR) technology. VR technology is a system simulation for integrating multi-source information, interactive three-dimensional dynamic scenes, and physical behaviors, so that a user is immersed in a virtual environment. AR technology is a technology for computing the position and angle of a camera image in real time and adding a corresponding image, video and three-dimensional model. AR technology can skillfully integrate virtual information with the real world.

At present, common gesture interaction methods comprise: (1) A distant object is selected and operated on the basis of a gesture extension line. However, the operation method based on a gesture extension line has a low operation precision for a distant object, for example, a slight angle change of a hand may cause a great change in selected place of the distant object. Furthermore, this method may also cause a situation where an operation instruction of a user is unreachable, thereby reducing usage experience of the user. 2). An object in a three-dimensional space is operated by directly using gesture interaction. However, the display method of operation interfaces of existing AR devices in a three-dimensional space still uses a plane display, so that the display position of a display area displayed to a user for viewing is inconsistent with that of an operation area of the user, reducing the reachability of a user gesture in the space, and thus the user cannot conveniently and quickly operate a virtual object.

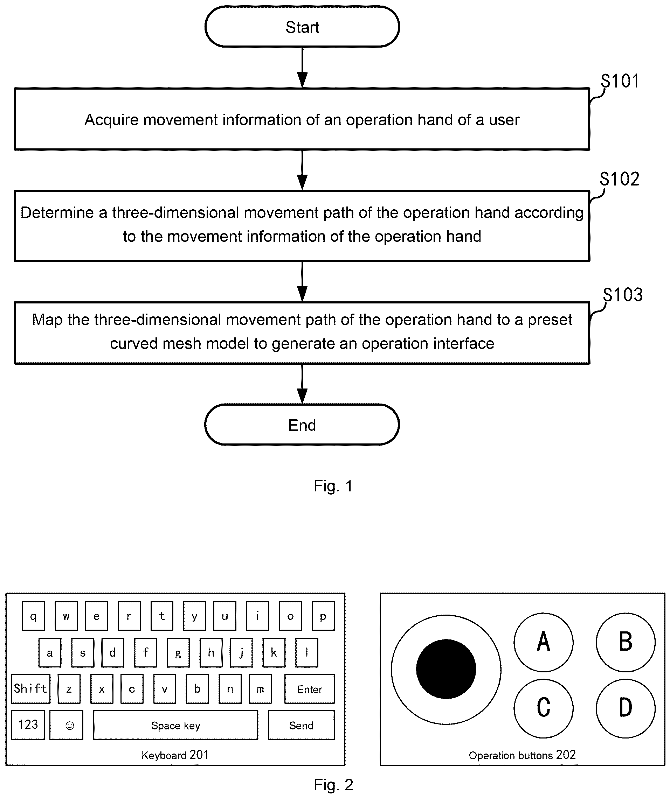

Fig. 1 is a schematic flowchart showing a method for generating an operation interface provided according to embodiments of the present disclosure. The method for generating an operation interface can be applied to an apparatus for generating an operation interface. As shown in Fig. 1, the method for generating an operation interface in the embodiments of the present disclosure may comprise the following steps.

At step S101, movement information of an operation hand of a user is acquired.

At step S102, a three-dimensional movement path of the operation hand is determined according to the movement information of the operation hand.

At step S103, the three-dimensional movement path of the operation hand is mapped to a preset curved mesh model to generate an operation interface.

The preset curved mesh model is a model determined on the basis of a preset wiring method and a preset angle.

In the embodiments, the three-dimensional movement path of the operation hand is determined according to the acquired movement information of the operation hand of the user, so that a specific movement path of the operation hand of the user can be accurately acquired, and a personalized operation method can be conveniently constructed for the user; and the three-dimensional movement path of the operation hand is mapped to the preset curved mesh model to generate the operation interface, wherein the preset curved mesh model is a model determined on the basis of the preset wiring method and the preset angle, so that the user can accurately control a virtual object by means of a stereoscopic operation interface, thereby improving the operation precision of the user on a distant virtual object, reducing the operation difficulty of the user on the virtual object, and improving the operation efficiency of the user on the virtual object, enabling the user to obtain the best usage experience.

The operation interface comprises: at least one operation and control area, the operation and control area being used for displaying a plurality of operation and control elements that can be operated and controlled by a user. The operation and control elements comprise: at least one of an operation button, an operation keyboard, a letter button, and an emoticon button.

At least one operation area is provided to a user, so that the user can operate and control a virtual object by means of a plurality of different operation and control elements in the operation area, and thus the user can process the virtual object more conveniently, and the operation and control precision of the user on the virtual object can also be improved, and the user can obtain better usage experience.

For example, Fig. 2 is a schematic diagram showing an operation interface provided according to embodiments of the present disclosure. As shown in Fig. 2, the operation interface comprises, but is not limited to, the following operation and control areas: a keyboard 201 and/or operation buttons 202. A user operates the keyboard 201 and/or the operation buttons 202 to implement operation and control of objects in a virtual world. In the keyboard 201, buttons with different functions, such as 26 English letters, an "Enter" key, a "Shift" key, a number key (for example, a "123" button), an emoticon key (for example, a " 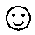 " button), a "Space" key, and a "Send" key, are arranged in sequence, so as to facilitate user operation.

The operation buttons 202 comprise four letter buttons (for example, buttons "A", "B", "C", and "D") and one black button. The black button can be used to operate and control the direction of a virtual object, and can improve the control precision on the direction of the virtual object.

It should be noted that, the operation interface shown in Fig. 2 only relates to different operation and control elements displayed on a plane (i.e. in a two-dimensional space). When a user uses an AR device, a VR device, or an MR device, a virtual object needs to be operated and controlled in a three-dimensional space; however, the operation and control elements displayed only in the two-dimensional space are not conducive to the manual operation of the user, and the operation interface needs to be mapped to the three-dimensional space, so as to facilitate user operation.

Before step S103 is executed, the preset curved mesh model can also be determined on the basis of the preset wiring method and the preset angle; and then mapping the three-dimensional movement path of the operation hand to the preset curved mesh model to generate the operation interface in step S103 is executed, so that the operation interface in Fig. 2 can be stereoscopically displayed in the preset curved mesh model.

The preset wiring method comprises: a method of segmenting and wiring a sphere on the basis of longitude and latitude lines, or a method of segmenting and wiring a sphere on the basis of a polygon. The polygon is a plane display shape constructed by sequentially connecting three or more line segments end to end. For example, the polygon may comprise a triangle, a quadrangle, an N-polygon, and the like, N being an integer greater than or equal to 3.

It should be noted that, the described preset wiring method is only an exemplary illustration, and can be specifically set according to actual needs, and the other unillustrated preset wiring method also fall within the scope of protection of the present disclosure, and they will not be repeated herein.

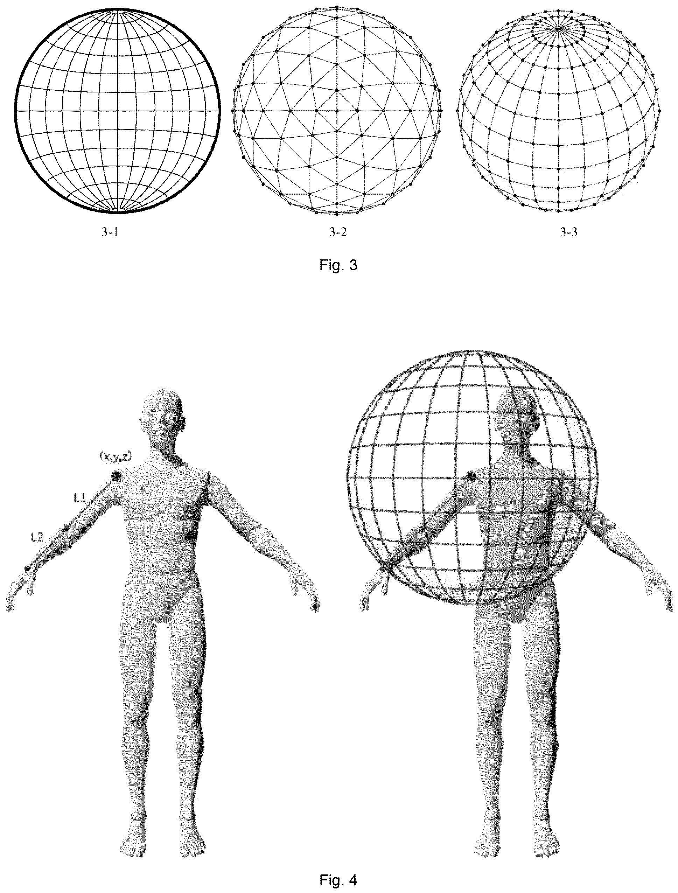

Fig. 3 is a schematic diagram showing a preset curved mesh model provided according to embodiments of the present disclosure. As shown in Fig. 3, a sphere 3-1 represents a longitude and latitude sphere that is segmented and wired on the basis of longitude and latitude lines; a sphere 3-2 represents a faceted sphere that is segmented and wired on the basis of a triangle; and a sphere 3-3 represents a polygonal sphere that is segmented and wired on the basis of a quadrangle. The preset curved mesh model may be the entire sphere or a part of the sphere to facilitate spatial operation of a user.

It should be noted that, the number of wirings in the above mesh spheres with different wiring method is directly proportional to the user operation fitting degree, the user operation fitting degree being a fitting degree between a three-dimensional movement path of an operation hand of a user and an operation interface.

For example, the more the number of wirings in the preset curved mesh model is, that is, the finer the segmentation of a mesh sphere is, the higher the user operation fitting degree is, that is, the higher the matching degree between the three-dimensional movement path of the operation hand of the user and the operation interface is.

In some specific implementations, before acquiring the movement information of the operation hand of the user in step S101 is executed, the method further comprises: acquiring attribute information of the operation hand of the user; and constructing a preset curved mesh model according to the attribute information of the operation hand.

The attribute information of the operation hand of the user comprises at least one of the length of an arm of the user, attribute information of a palm and attribute information of a plurality of fingers.

It should be noted that, as attribute information of operation hands of different users is different (for example, the lengths of arms of the users are different, attribute information of palms is also different, and the corresponding lengths of fingers of different users are also different), the correspondingly constructed preset curved network models also vary from person to person.

Preset curved mesh models matching different users are constructed according to attribute information of operation hands of different users in different dimensions. In this way, operation information of the users in a three-dimensional space can be more personalized, and the constructed preset curved mesh models can better conform to operation habits of different users, so that it is more convenient for the users to operate in the three-dimensional space, and thus the users more precisely control objects in a virtual world, thereby improving the usage experience of the users.

In some specific implementations, the attribute information of the operation hand of the user comprises: arm attribute information of the user and position information of a shoulder joint of the user. Constructing a preset curved mesh model according to the attribute information of the operation hand comprises: constructing the preset curved mesh model according to the position information of the shoulder joint of the user and the arm attribute information of the user.

For example, Fig. 4 is a schematic diagram showing a method for constructing a preset curved mesh model provided according to embodiments of the present disclosure. The left half part in Fig. 4 shows position information (e.g. coordinate values (x, y, z) in three-dimensional space coordinates, where x, y, z are all real numbers) of a shoulder joint of a user, and the length of the upper arm of the user is L1, and the length of the forearm of the user is L2, wherein L1 and L2 are both real numbers greater than 1. By means of the attribute information, attribute information of an operation hand (e.g. the right hand or the left hand) of the user can be specifically reflected, so as to facilitate construction of a preset curved mesh model subsequently using the attribute information of the operation hand.

The right half part in Fig. 4 shows that a mesh sphere is constructed by using the position coordinate point (x, y, z) of the shoulder joint of the user as the center of circle and using the sum (i.e. L1 + L2) of the lengths of the upper arm and the forearm as the radius, and a wiring method of the mesh sphere may be any one of the preset wiring method. Then, all or some of the curved meshes of the mesh sphere may be used as the preset curved mesh model.

The preset curved mesh model is constructed according to the position information of the shoulder joint of the user and the arm attribute information of the user, so that personalized usage requirements of different users can be reflected, and the preset curved mesh model can better conform to the usage requirements of the user, thereby improving the usage experience of the user.

For example, before acquiring the movement information of the operation hand of the user in step S101 is executed, the method further comprises: acquiring attribute information of the operation hand of the user and visual range information of the user; and constructing a preset curved mesh model according to the attribute information of the operation hand and the visual range information of the user.

The visual range information of the user comprises a visual range of the user's eyes.

A first mesh sphere constructed on the basis of the attribute information of the operation hand of the user is constrained and matched by means of the visual range of the user's eyes, so as to obtain a part of stereoscopic curved surface in the first mesh sphere, and the part of stereoscopic curved surface is used as the preset curved mesh model. A spatial range that can be operated by the user can be planned more accurately, so that the preset curved mesh model better conforms to the operation requirements of the user, thereby facilitating user operation and usage.

In some specific implementations, the attribute information of the operation hand of the user comprises: arm attribute information of the user and position information of a shoulder joint of the user. Constructing a preset curved mesh model according to the attribute information of the operation hand and the visual range information of the user comprises: constructing a mesh sphere according to the position information of the shoulder joint of the user and the arm attribute information of the user, wherein the mesh sphere is a sphere determined on the basis of a preset wiring method; determining a preset angle according to the visual range information of the user; and determining a preset curved mesh model according to the mesh sphere and the preset angle.

The preset angle may be used to represent a visual angle of the user. For example, in cases where the user keeps the head stationary, a ray extending in front of the user with the user's eyes as the center of a circle is set as 0 degrees, so that the visual angle that can be viewed by the user ranges from 50 degrees upwards to 70 degrees downwards. For another example, in cases where the user keeps the head stationary, the line of sight is set to extend to the left and right of the user respectively with the user's eyes as the center of a circle, so that a visual angle of the user may range from 90 degrees to the left to 90 degrees to the right, etc. By stereoscopically representing the visual angle of the user, visual range information that can be viewed by the user can be determined, thereby facilitating user operation.

The mesh sphere is constructed by using the position information of the shoulder joint of the user as the center of circle and using the length of the upper arm and/or the length of the forearm as the radius, so that the user can conveniently operate operation elements on the mesh sphere on the basis of the length of the arm. As the visual range of the user is limited, the preset angle is determined according to the visual range information of the user (for example, information such as the head coordinates and the eye coordinates of the user), and thus some of the curved meshes in the mesh sphere may be intercepted according to the preset angle to obtain an optimal operation and control area model, i.e. the preset curved mesh model, so that the preset curved mesh model can better conform to the operable and controllable range of the user, thereby improving the operation accuracy of the user.

In some specific implementations, determining the three-dimensional movement path of the operation hand according to the movement information of the operation hand in step S102 comprises: determining boundary displacement information and boundary angle information according to the movement information of the operation hand; and determining the three-dimensional movement path of the operation hand according to the boundary displacement information and the boundary angle information.

For example, at least one range of motion can be determined according to the movement information of the operation hand (for example, the at least one range of motion comprises: a first range of motion determined by displacement information of a palm based on a closed route, and/or a second range of motion determined by displacement information of the palm based on the preset number of swings); the boundary displacement information and the boundary angle information are determined according to the at least one range of motion, so that the fastest spatial position that can be operated by the user can be learned (for example, the farthest displacement information and/or the maximum angle information that the operation hand can rotate), so as to facilitate determination of the movement path of the operation hand of the user; and the three-dimensional movement path of the operation hand is determined according to the boundary displacement information and the boundary angle information, thereby improving the operation accuracy of the user in the three-dimensional space.

The movement information of the operation hand comprises: displacement information of a palm based on a closed route, and/or displacement information of the palm based on the preset number of swings (for example, at least two swings in opposite directions).

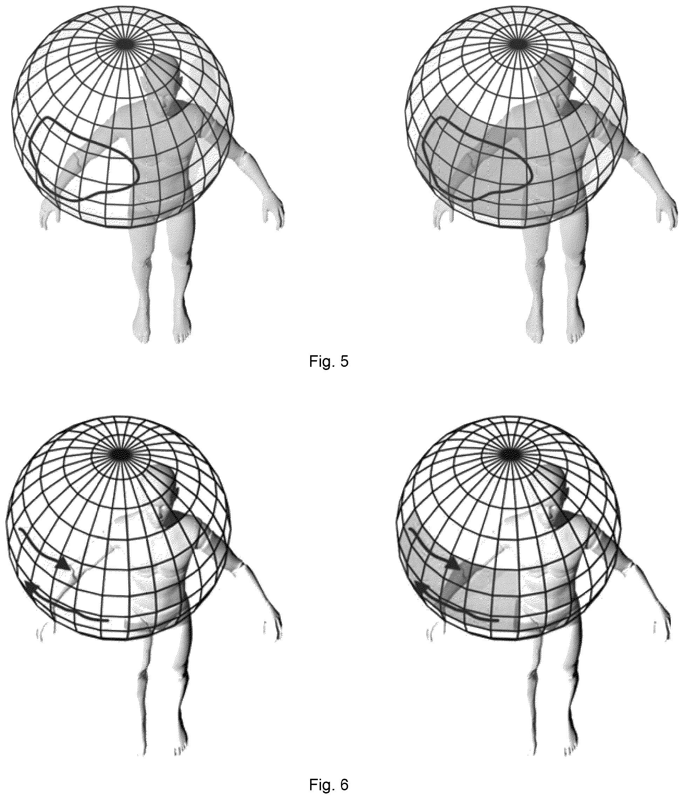

For example, Fig. 5 is a schematic diagram showing a user operation method in the process of constructing a preset curved mesh model provided according to embodiments of the present disclosure. As shown in Fig. 5, an operation hand of a user swings in a circular shape in space, so as to generate a spatial closed route. The closed route can reflect displacement information of the palm of the user based on the closed route, so as to obtain a first range of motion determined by the displacement information of the palm based on the closed route.

For another example, Fig. 6 is a schematic diagram showing a user operation method in the process of constructing a preset curved mesh model provided according to some other embodiments of the present disclosure. As shown in Fig. 6, an operation hand of a user performs at least two swings in opposite directions in space, so as to obtain displacement information of the palm of the user in the swinging process, and thus obtain a second range of motion determined by the displacement information of the palm based on the at least two swings in opposite directions.

It should be noted that, in order to ensure the accuracy of the second range of motion, the preset number of swings of the user in the swing process may be set according to actual detection requirements (for example, set three times, five times, and so on). Fig. 6 only exemplarily shows the direction and number of swings of the palm of the user, and the other preset number of wings that are not shown also fall within the scope of protection of the present disclosure, and they will not be repeated herein.

The first range of motion and/or the second range of motion are obtained by means of the described operations, so that the boundary displacement information and the boundary angle information of the user in a three-dimensional space can be determined, and thus optimization processing such as selection and/or supplementation is performed on the meshes, through which the three-dimensional movement path of the operation hand passes, according to the boundary displacement information and the boundary angle information, so as to obtain a more accurate user operation range, thereby improving the accuracy of determining a controllable operation range of the user.

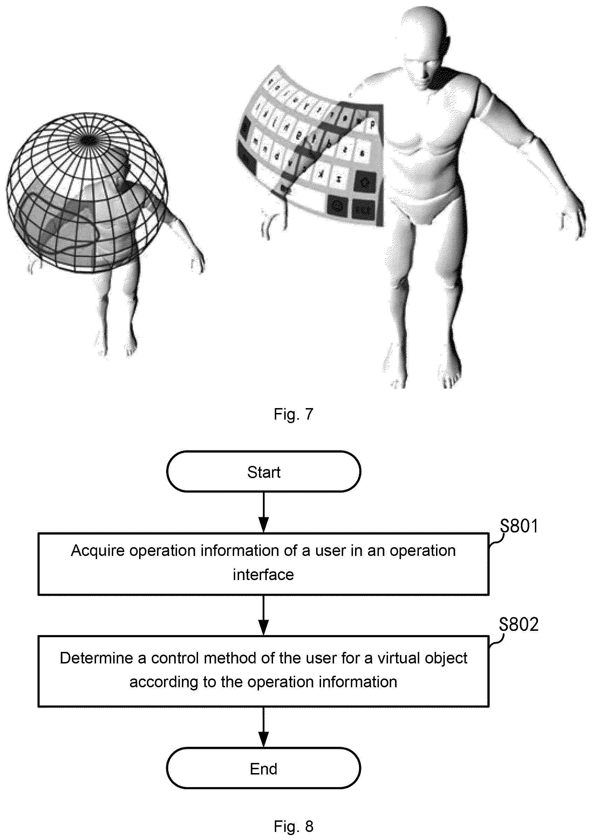

In some embodiments, the size of the keyboard 201 shown in Fig. 2 is adjusted, so that the generated three-dimensional operation interface can completely display the keyboard 201 at the maximum size. Fig. 7 is a schematic diagram showing a three-dimensional operation interface provided according to embodiments of the present disclosure. A user can view the three-dimensional operation interface by using a VR device, an AR device or an XR device, and each operation element in the three-dimensional operation interface supports the user to directly perform a touch operation by means of a gesture.

As shown in Fig. 7, an operation keyboard is displayed by means of a stereoscopic operation interface, so that it is more convenient for a user to perform near-distance operation and control on different buttons on the keyboard in an optimal operation and control space, thereby improving the usage experience of the user.

It should be noted that, as the preset wiring method and the number of wirings in a preset curved mesh model are different, the corresponding fitting degree is also different when the user operates the keyboard in the three-dimensional operation interface. When the number of wirings is less than a preset number threshold, the operation precision of the user may be reduced; and when the number of wirings is greater than the preset number threshold, the operation sensitivity of the user may be increased. The number of wirings can be set according to actual requirements of the user, just as the user sets the operation and control accuracy for a mouse according to usage habits of the user, so as to satisfy the personalized requirements of the user.

When the user performs a touch operation on a stereoscopic keyboard on the three-dimensional operation interface directly using a gesture operation, all operation and control elements of the stereoscopic keyboard are within an optimal reachable range for the user, so that the operation experience and touch efficiency of the user on the stereoscopic keyboard are obviously improved.

In some specific implementations, after the three-dimensional movement path of the operation hand is mapped to the preset curved mesh model to generate the operation interface, the method further comprises: upon determining that a preset part of the user moves, acquiring movement information of the preset part; updating the movement information of the operation hand according to the movement information of the preset part; updating the three-dimensional movement path of the operation hand on the basis of the updated movement information of the operation hand; and updating the operation interface according to the updated three-dimensional movement path of the operation hand.

The preset part comprises: any one of a shoulder joint, a head, a nose, a mouth and eyes.

In the process of the user operating and controlling a virtual object by using the operation and control elements in the three-dimensional operation interface, a preset part of the user may experience displacement or rotation (for example, the shoulder joint experiences a relatively short displacement in the horizontal direction, the head rotates a certain angle, etc.). In this case, an apparatus for generating an operation interface needs to acquire movement information of the preset part that has changed, so as to update the movement information of the operation hand according to the movement information of the preset part (for example, if the shoulder joint experiences a relatively short displacement in the horizontal direction, then the corresponding preset curved mesh model may change in space), and fine-tune relevant parameters for constructing the preset curved mesh model (for example, updating the position information of the shoulder joint serving as the center of circle, updating the original position coordinates (x, y, z) of the shoulder joint to the changed position coordinates (x0, y0, z0) of the shoulder joint, etc., where x0, y0 and z0 are all real numbers); and update the three-dimensional movement path of the operation hand on the basis of the updated movement information of the operation hand (for example, performing a corresponding conversion on the movement information of the operation hand (e.g. the displacement distance or the rotation angle of the operation hand, etc.) according to a transformation relationship between position coordinates (x, y, z) and (x0, y0, z0) of the shoulder joint, so as to obtain the updated three-dimensional movement path of the operation hand), so that the updated three-dimensional movement path of the operation hand better matches the updated preset curved mesh model. As a result, the updated operation interface can better match the usage range of the user, thereby implementing the tracking effect of the three-dimensional operation interface during the process where the preset part of the user changes, and improving user experience.

For example, making the updated three-dimensional operation interface correspond to the original three-dimensional operation interface is to follow the operation of movement or rotation, so that the relative position of the updated three-dimensional operation interface to the shoulder joint point of the user can be kept consistent, which conforms to the operation requirements of the user.

In some specific implementations, after the three-dimensional movement path of the operation hand is mapped to the preset curved mesh model to generate the operation interface, the method further comprises: upon determining that a reconstruction request fed back by a user is obtained, reconstructing the three-dimensional operation interface according to the obtained updated movement information of the operation hand.

It should be noted that, when the displacement or angle of the preset part of the user changes greatly (for example, in cases where the change displacement of the preset part is greater than a preset displacement threshold (e.g. the change displacement is greater than 1 meter, etc.), or the change angle of the preset part is greater than a preset angle threshold (e.g. the change angle is greater than 90 degrees, etc.), the user may send a reconstruction request to the apparatus for generating an operation interface due to inconvenience in operation, so that the apparatus for generating an operation interface can reconstruct the three-dimensional operation interface on the basis of the updated movement information of the operation hand. This reconstruction method is the same as the method for generating an operation interface according to any embodiment of the present disclosure, and they will not be repeated herein.

Upon determining that the reconstruction request fed back by the user is obtained, the three-dimensional operation interface is reconstructed according to the obtained updated movement information of the operation hand, so that the user can obtain a three-dimensional operation interface more conforming to the current position of the user, and the user can more accurately operate a virtual object on the basis of the updated three-dimensional operation interface, thereby improving the usage experience of the user.

Fig. 8 is a schematic flowchart showing a method for controlling an operation interface provided according to embodiments of the present disclosure. The method for generating an operation interface may be applied to an apparatus for controlling an operation interface. The operation interface an interface generated on the basis of the method for generating an operation interface according to any embodiment of the present disclosure.

As shown in Fig. 8, the method for controlling an operation interface according to embodiments of the present disclosure may comprise the following steps.

At step S801, operation information of a user in an operation interface is acquired.

The operation information may comprise control information of the user for different operation elements in the operation interface. For example, letter information corresponding to a letter button pressed by the user, moving direction information corresponding to a direction button operated by the user, and the like.

At step S802, a control method of the user for a virtual object is determined according to the operation information.

For example, when the operation information comprises that the user controls the direction button to move upward and the input displacement information is 1 meter, it can be determined that the user wants to control the virtual object to move upward by 1 meter. For another example, when the operation information comprises that the input letter information is continuous M, O, V, and E, it can be learned that the user needs to "move" the virtual object (i.e. moving the virtual object).

By means of different operation information, different control methods of the user for the virtual object can be determined, so that the user can precisely control the virtual object, thereby improving the interaction efficiency between the user and a machine device.

In the embodiments, an operation interface is generated by using the method for generating an operation interface according to any embodiment of the present disclosure, so that a user can accurately control a virtual object by means of a stereoscopic operation interface, so that a user can accurately control a virtual object by means of a stereoscopic operation interface; operation information of the user in the operation interface is acquired, so that the operation precision of the user on a distant virtual object is improved; and a control method of the user for the virtual object is determined according to the operation information, thereby reducing the operation difficulty of the user on the virtual object, enabling the user to more precisely operate and control the virtual object, and improving the interaction efficiency between the user and a machine device.

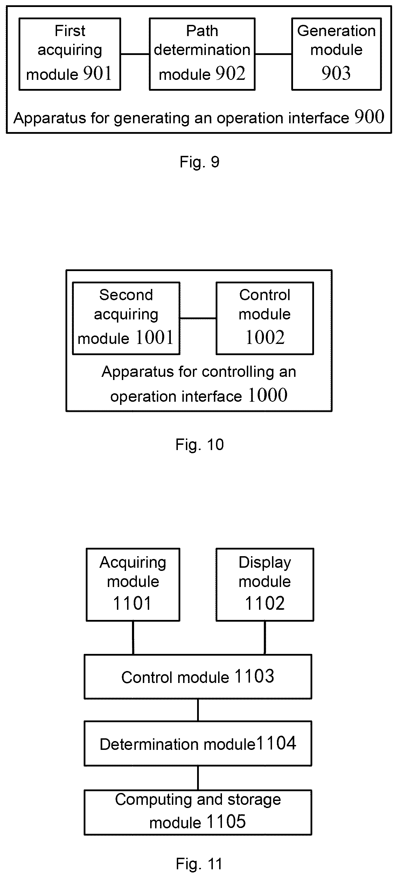

Hereinafter, an apparatus for generating an operation interface according to embodiments of the present disclosure will be described in detail with reference to the accompanying drawings. Fig. 9 is a schematic structural diagram showing an apparatus for generating an operation interface provided according to embodiments of the present disclosure. As shown in Fig. 9, the apparatus 900 for generating an operation interface may comprise the following modules.

A first acquiring module 901, configured to acquire movement information of an operation hand of a user; a path determination module 902, configured to determine a three-dimensional movement path of the operation hand according to the movement information of the operation hand; and a generation module 903, configured to map the three-dimensional movement path of the operation hand to a preset curved mesh model to generate an operation interface, wherein the preset curved mesh model is a model determined on the basis of a preset wiring method and a preset angle.

According to the apparatus for generating an operation interface according to embodiments of the present disclosure, the path determination module determines the three-dimensional movement path of the operation hand according to the acquired movement information of the operation hand of the user, so that a specific movement path of the operation hand of the user can be accurately acquired, and a personalized operation method can be conveniently constructed for the user; and the generation module maps the three-dimensional movement path of the operation hand to the preset curved mesh model to generate the operation interface, wherein the preset curved mesh model is a model determined on the basis of the preset wiring method and the preset angle, so that the user can accurately control a virtual object by means of a stereoscopic operation interface, thereby improving the operation precision of the user on a distant virtual object, reducing the operation difficulty of the user on the virtual object, and improving the operation efficiency of the user on the virtual object, enabling the user to obtain the best usage experience.

Fig. 10 is a schematic structural diagram showing an apparatus for controlling an operation interface provided according to embodiments of the present disclosure. On the basis of the method for generating an operation interface according to any embodiment of the present disclosure, an operation interface is generated. As shown in Fig. 10, the apparatus 1000 for controlling an operation interface may comprise the following modules.

A second acquiring module 1001, configured to acquire operation information of a user in an operation interface.

A control module 1002, configured to determine, according to the operation information, a control method of the user for a virtual object.

According to the apparatus for generating an operation interface according to embodiments of the present disclosure, the operation interface is generated by using the method for generating an operation interface according to any embodiment of the present disclosure, so that the user can accurately control the virtual object by means of a stereoscopic operation interface; the second acquiring module acquires the operation information of the user in the operation interface, so that the operation precision of the user on a distant virtual object is improved; and the control module determines, according to the operation information, the control method of the user for the virtual object, thereby reducing the operation difficulty of the user on the virtual object, enabling the user to more precisely operate and control the virtual object, and improving the interaction efficiency between the user and a machine device.

Fig. 11 is a schematic structural diagram showing an electronic device provided according to embodiments of the present disclosure. For example, the electronic device may be any one of a VR device, an AR device, and an MR device. A user performs gesture-based information interaction with a machine device by using the electronic device, thereby implementing user operation in a three-dimensional space.

As shown in Fig. 11, the electronic device comprises, but is not limited to, the following modules: an acquiring module 1101, a display module 1102, a control module 1103, a determination module 1104, and a computing and storage module 1105.

The acquiring module 1101 is configured to acquire user data. For example, attribute information of an operation hand of a user, movement information of the operation hand, and the like are acquired by using a sensor in the VR device, a sensor in the AR device, a sensor in the XR device, or the like. The sensor may comprise at least one of a myoelectric sensor, a pose sensor, and an audio receiving sensor. Furthermore, a three-dimensional depth camera, a binocular camera, and/or the like may also be installed in the VR device. The attribute information of the operation hand comprises at least one of position information of a shoulder joint of the user in a three-dimensional space, the length of an upper arm, and the length of a forearm. The movement information of the operation hand comprises position information of a palm of the user during a movement process, and data on gesture interaction between the user and a display interface. The described user data may be stored in the computing and storage module 1105.

The display module 1102 is configured to display information stored in the computing and storage module 1105 in the three-dimensional space, so as to facilitate user viewing.

The control module 1103 is configured to control the acquiring module 1101 to acquire the user data upon receiving a control instruction sent by the determination module 1104, and control the display module 1102 to display information.

The determination module 1104 is configured to determine, on the basis of the user data stored in the computing and storage module 1105, whether to send the control instruction to the control module 1103 (for example, determining whether to generate a control instruction according to the usage requirements of the user, etc.). Upon determining that the control instruction needs to be sent, the control instruction is sent to the control module 1103, so that the control model 1103 performs a corresponding operation according to the control instruction. The control instruction may comprise: controlling the display module 1102 to display a plurality of operation and control elements in at least one operation and control area, so that the user controls the operation and control elements.

The computing and storage module 1105 is configured to compute and store the user data acquired by the acquiring module 1101. For example, a three-dimensional movement path of the operation hand is determined according to the movement information of the operation hand, and the three-dimensional movement path of the operation hand is mapped to a preset curved mesh model to generate an operation interface, wherein the operation interface is an operation interface that can be displayed in the three-dimensional space. Furthermore, operation information of the user in the operation interface may also be stored, so as to facilitate confirmation of the control method of the user for a virtual object according to the operation information.

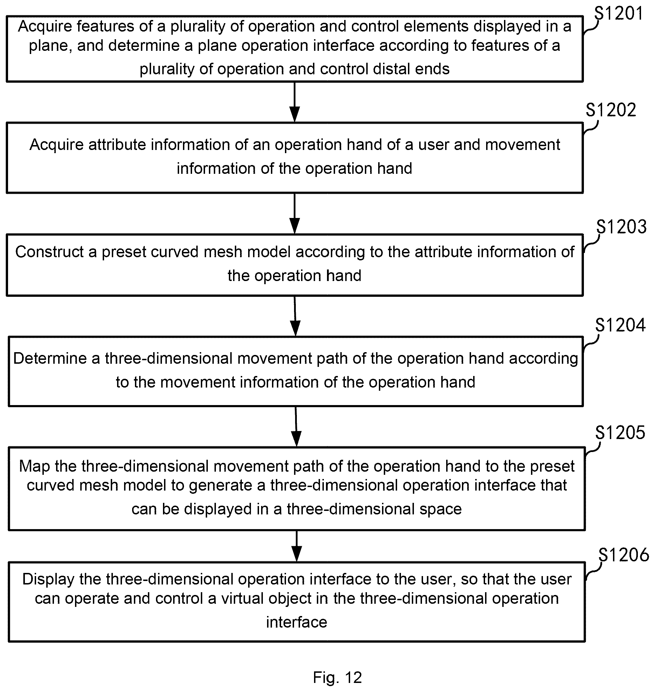

Fig. 12 is a schematic flowchart showing a working method of an electronic device provided according to embodiments of the present disclosure. As shown in Fig. 12, the working method of the electronic device comprises, but is not limited to, the following steps.

At step S1201, features of a plurality of operation and control elements displayed in a plane are acquired, and a plane operation interface is determined according to features of a plurality of operation and control distal ends.

The operation and control elements may comprise a plurality of different elements such as a letter button, a direction button, an emoticon button, a letter button, and a function key. The plurality of operation and control elements may be arranged and combined according to usage habits of a user, so as to determine the plane operation interface.

For example, the plane operation interface may be displayed by operating a keyboard and/or operating a button control area, so as to facilitate user usage.

At step S1202, attribute information of an operation hand of a user and movement information of the operation hand are acquired.

The attribute information of the operation hand comprises at least one of position information of a shoulder joint of the user in a three-dimensional space, the length of an upper arm, and the length of a forearm.

The movement information of the operation hand comprises displacement information of a palm based on a closed route, and/or displacement information of the palm based on the preset number of swings, data on gesture interaction between the user and a display interface, and the like.

At step S1203, a preset curved mesh model is constructed according to the attribute information of the operation hand.

The preset curved surface network model is a model determined on the basis of a preset wiring method and a preset angle, wherein the preset wiring method comprises a method of segmenting and wiring a sphere on the basis of longitude and latitude lines, or a method of segmenting and wiring a sphere on the basis of a polygon, the polygon being a plane graph formed by sequentially connecting three or more line segments end to end.

At step S1204, a three-dimensional movement path of the operation hand is determined according to the movement information of the operation hand.

The movement information of the operation hand comprises a movement trajectory in a three-dimensional space that is formed by the user swinging a palm at least twice. By means of the movement trajectory, the three-dimensional movement path of the operation hand can be determined, and thus boundary position information and boundary angle information of the palm of a user being able to move are determined.

At step S1205, the three-dimensional movement path of the operation hand is mapped to the preset curved mesh model to generate a three-dimensional operation interface that can be displayed in the three-dimensional space.

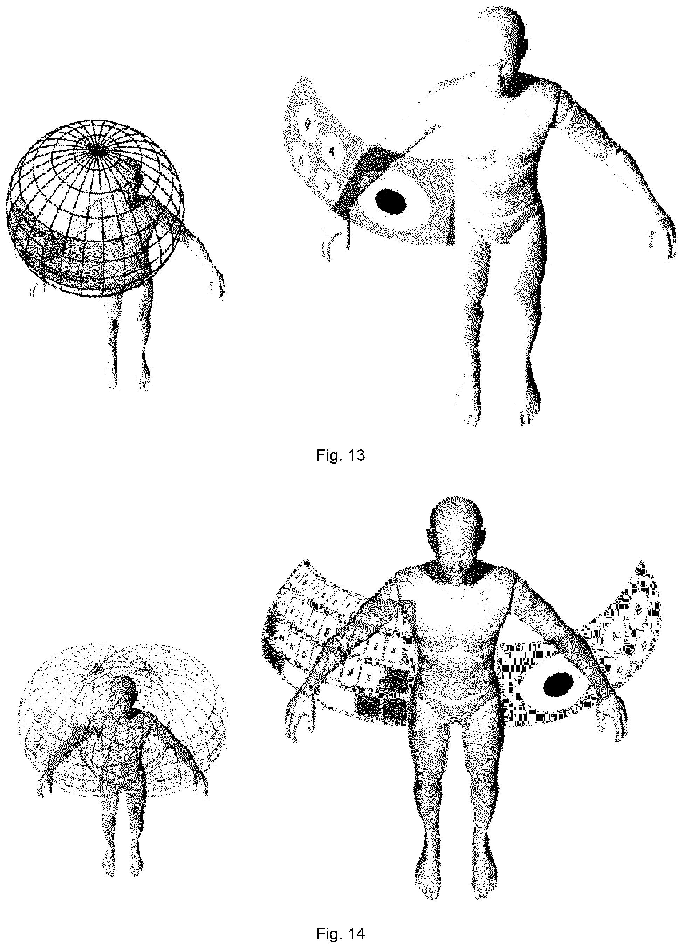

For example, Fig. 13 is a schematic diagram showing a three-dimensional operation interface provided according to some other embodiments of the present disclosure. As shown in Fig. 13, the operation buttons 202 in Fig. 2 are mapped to a preset curved mesh model, so that the operation buttons 202 can be stereoscopically displayed to a user.

It should be noted that, the display range of the generated three-dimensional operation interface is an optimal display range determined according to boundary position information and boundary angle information of a palm of the user being able to move. In the three-dimensional operation interface, the operation buttons 202 can be fully displayed, so as to facilitate user operation. For the user, the operation buttons displayed in the three-dimensional operation interface are all within an optimal reachable range of the user, thereby improving touch operation efficiency of the user, and improving operation experience of the user.

For another example, if there are too many operation elements, it may also support the user to construct a plurality of three-dimensional operation interfaces at the same time. For example, a plurality of three-dimensional operation interfaces are constructed by means of three-dimensional movement paths of the left and right hands of the user.

Fig. 14 is a schematic diagram showing a three-dimensional operation interface provided according to still some other embodiments of the present disclosure. As shown in Fig. 14, the keyboard 201 and the operation buttons 202 in Fig. 2 are mapped to a preset curved mesh model, respectively, so that a plurality of three-dimensional operation interfaces can be stereoscopically displayed to a user, so as to facilitate user operation.

At step S1206, a three-dimensional operation interface is displayed to the user, so that the user can operate and control a virtual object in the three-dimensional operation interface.

For example, the user can operate, by means of his/her right hand, operation and control elements on the keyboard 201 in the three-dimensional operation interface, and at the same time, the user can also operate, by means of his/her left hand, buttons among the operation buttons 202 in the three-dimensional operation interface, thereby satisfying the personalized requirements of the user, and improving the operation efficiency of the user.

In the embodiments, the three-dimensional movement path of the operation hand is determined according to the acquired movement information of the operation hand of the user, so that a specific movement path of the operation hand of the user can be accurately acquired, and a personalized operation method can be conveniently constructed for the user; the three-dimensional movement path of the operation hand is mapped to the preset curved mesh model to generate the three-dimensional operation interface, so that the user can accurately control a virtual object by means of a stereoscopic three-dimensional operation interface, thereby improving the operation precision of the user on a distant virtual object, reducing the operation difficulty of the user on the virtual object, and improving the operation efficiency of the user on the virtual object, and thus the user can more intuitively control the virtual object by means of gesture operation, and obtain the best usage experience.

It should be understood that the present disclosure is not limited to the particular configurations and processing described in the embodiments above and shown in the accompanying drawings. To make the description convenient and brief, a detailed description of a known method is omitted herein, and for a specific working process of the systems, modules and units described above, reference can be made to the corresponding process in the method embodiments above, and they will not be repeated herein.

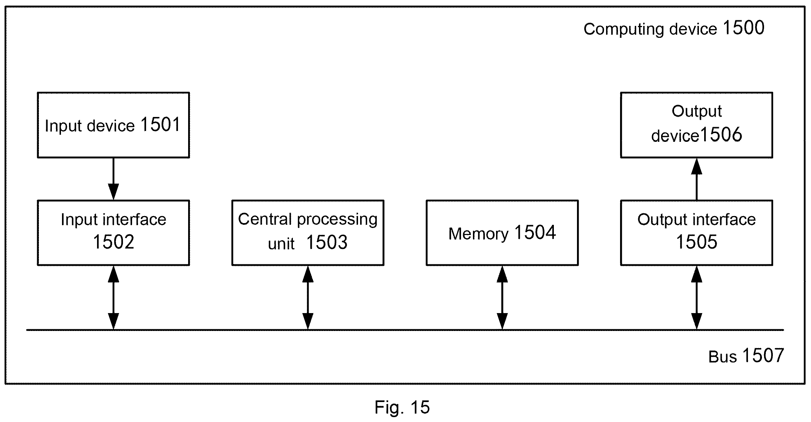

Fig. 15 is a structural diagram showing an exemplary hardware architecture of a computing device capable of implementing a method for generating an operation interface or a method for controlling an operation interface according to embodiments of the present disclosure.

As shown in Fig. 15, the computing device 1500 comprises an input device 1501, an input interface 1502, a central processing unit 1503, a memory 1504, an output interface 1505, and an output device 1506. The input interface 1502, the central processing unit 1503, the memory 1504, and the output interface 1505 are connected to each other by means of a bus 1507. The input device 1501 and the output device 1506 are connected to the bus 1507 respectively through the input interface 1502 and the output interface 1505, and are further connected to other components of the computing device 1500.

In some embodiments, the input device 1501 receives input information from outside, and transmits the input information to the central processing unit 1503 through the input interface 1502; the central processing unit 1503 processes the input information on the basis of a computer-executable instruction stored in the memory 1504 so as to generate output information, temporarily or permanently stores the output information in the memory 1504, and then transmits the output information to the output device 1506 through the output interface 1505; and the output device 1506 outputs the output information to the exterior of the computing device 1500 for user usage.

In some embodiments, the computing device shown in Fig. 15 may be implemented as an electronic device. The electronic device may comprise: a memory, configured to store a program; and a processor, configured to run the program stored in the memory, so as to execute the method for generating an operation interface described in any embodiment above, or the method for controlling an operation interface according to any embodiment of the present disclosure.

In some embodiments, the computing device shown in Fig. 15 may be implemented as a system for generating an operation interface. The system for generating an operation interface may comprise: a memory, configured to store a program; and a processor, configured to run the program stored in the memory, so as to execute the method for generating an operation interface described in any embodiment above.

In some embodiments, the computing device shown in Fig. 15 may be implemented as a system for controlling an operation interface. The system for controlling an operation interface may comprise: a memory, configured to store a program; and a processor, configured to run the program stored in the memory, so as to execute the method for controlling an operation interface described in any embodiment above.

The content above is only exemplary embodiments of the present disclosure, but is not intended to limit the scope of protection of the present disclosure. In general, various embodiments of the present disclosure may be implemented in hardware or dedicated circuits, software, logic, or any combination thereof. For example, some aspects may be implemented in hardware, and other aspects may be implemented in firmware or software that can be executed by a controller, a microprocessor or other computing apparatuses, although the present disclosure is not limited thereto.

Embodiments of the present disclosure can be implemented by execution of computer program instructions by a data processor of a mobile apparatus, such as in a processor entity, by hardware, or by a combination of software and hardware. The computer program instructions may be assembly instructions, instruction set architecture (ISA) instructions, machine instructions, machine-related instructions, microcodes, firmware instructions, state setting data, or source or object codes written in any combination of one or more programming languages.

The block diagrams of any logic flow in the accompanying drawings of the present disclosure may represent program steps, or may represent interconnected logic circuits, modules, and functions, or may represent combinations of program steps and logic circuits, modules, and functions. A computer program may be stored on a memory. The memory may be of any type suitable to the local technical environment and may be implemented using any suitable data storage technology, for example, but not limited to, a read only memory (ROM), a random access memory (RAM), optical memory apparatuses and systems (digital versatile discs (DVDs) or CDs), etc. A computer-readable medium may comprise a non-transitory storage medium. The data processor may be of any type suitable to the local technical environment, for example, but not limited to, a general-purpose computer, a special-purpose computer, a microprocessor, a digital signal processor (DSP), an application specific integrated circuit (ASIC), a programmable logic device, e.g. FGPA, and a processor based on a multi-core processor architecture.

The detailed description of exemplary embodiments of the present disclosure has been provided above by means of exemplary and non-limiting examples. In view of the accompanying drawings and the claims, various modifications and adaptations made to the embodiments above would have been obvious to a person skilled in the art, without departing from the scope of the present disclosure. Therefore, the appropriate scope of the present disclosure will be determined according to the claims.

## Claims

1. A method for generating an operation interface, comprising:
acquiring movement information of an operation hand of a user;
determining a three-dimensional movement path of the operation hand according to the movement information of the operation hand; and
mapping the three-dimensional movement path of the operation hand to a preset curved mesh model to generate an operation interface, wherein the preset curved mesh model is a model determined on the basis of a preset wiring method and a preset angle.

2. The method according to claim 1, wherein determining the three-dimensional movement path of the operation hand according to the movement information of the operation hand comprises:
determining boundary displacement information and boundary angle information according to the movement information of the operation hand; and
determining the three-dimensional movement path of the operation hand according to the boundary displacement information and the boundary angle information.

3. The method according to claim 2, wherein the movement information of the operation hand comprises: displacement information of a palm based on a closed route, and/or displacement information of the palm based on the preset number of swings.

4. The method according to claim 1, wherein after mapping the three-dimensional movement path of the operation hand to the preset curved mesh model to generate the operation interface, the method further comprises:
in a case of determining that a preset part of the user moves, acquiring movement information of the preset part;
updating the movement information of the operation hand according to the movement information of the preset part;
updating the three-dimensional movement path of the operation hand on the basis of the updated movement information of the operation hand; and
updating the operation interface according to the updated three-dimensional movement path of the operation hand.

5. The method according to claim 1, wherein before acquiring the movement information of the operation hand of the user, the method further comprises:
acquiring attribute information of the operation hand of the user, wherein the attribute information of the operation hand of the user comprises: arm attribute information of the user and position information of a shoulder joint of the user; and
constructing the preset curved mesh model according to the position information of the shoulder joint of the user and the arm attribute information of the user.

6. The method according to claim 1, wherein before acquiring the movement information of the operation hand of the user, the method further comprises:
acquiring the attribute information of the operation hand of the user and visual range information of the user, wherein the attribute information of the operation hand of the user comprises: the arm attribute information of the user and the position information of the shoulder joint of the user;
constructing a mesh sphere according to the position information of the shoulder joint of the user and the arm attribute information of the user, wherein the mesh sphere is a sphere determined on the basis of the preset wiring method;
determining the preset angle according to the visual range information of the user; and
determining the preset curved mesh model according to the mesh sphere and the preset angle.

7. The method according to claim 6, wherein the preset wiring method comprises: a method of segmenting and wiring the sphere on the basis of longitude and latitude lines, or a method of segmenting and wiring the sphere on the basis of a polygon.

8. The method according to any one of claims 1 to 7, wherein the operation interface comprises: at least one operation and control area; and the operation and control area is used to display a plurality of operation and control elements that can be operated and controlled by the user.

9. A method for controlling an operation interface, the operation interface being generated on the basis of the method for generating an operation interface according to any one of claims 1 to 8, and the method comprises:
acquiring operation information of a user in the operation interface; and
determining a control method of the user for a virtual object according to the operation information.

10. An apparatus for generating an operation interface, the apparatus comprises:
a first acquiring module, configured to acquire movement information of an operation hand of a user;
a path determination module, configured to determine a three-dimensional movement path of the operation hand according to the movement information of the operation hand; and
a generation module, configured to map the three-dimensional movement path of the operation hand to a preset curved mesh model to generate an operation interface, wherein the preset curved mesh model is a model determined on the basis of a preset wiring method and a preset angle.

11. An apparatus for controlling an operation interface, the operation interface being generated on the basis of the method for generating an operation interface according to any one of claims 1 to 8, and the apparatus comprises:
a second acquiring module, configured to acquire operation information of a user in the operation interface; and
a control module, configured to determine a control method of the user for a virtual object according to the operation information.

12. An electronic device, comprising:
one or more processors; and
a memory, on which one or more programs are stored, the one or more programs are configured to, when executed by the one or more processors, cause the one or more processors to implement the method for generating an operation interface according to any one of claims 1 to 8, or to implement the method for controlling an operation interface according to claim 9.

13. A computer-readable storage medium, storing a computer program which, when executed by a processor, implements the method for generating an operation interface according to any one of claims 1 to 8, or implements the method for controlling an operation interface according to claim 9.
